# EUROPEAN PATENT APPLICATION

(11) **EP 3 001 354 A1**
(43) Date of publication of application: **30.03.2016**
(21) Application number: 14813881.1
(22) Date of filing: 13.06.2014
(51) Int. Cl.: G06K 9/66

(54) **OBJECT DETECTION METHOD AND DEVICE FOR ONLINE TRAINING**

(30) Priority: 17.06.2013 CN 201310241922
(71) Applicant: Huawei Device Co., Ltd., Shenzhen, Guangdong 518129 (CN)
(72) Inventor: WEI, Daiyu, Shenzhen Guangdong 518129 (CN); LUO, Wei, Shenzhen Guangdong 518129 (CN); DENG, Bin, Shenzhen Guangdong 518129 (CN)
(74) Representative: Thun, Clemens
(86) International application number: PCT/CN2014/079822
(87) International publication number: WO 2014/201971

(57) **Abstract**

A target detection method and apparatus based on online training are provided. According to this method, an N^{th} frame of image is obtained; target detection and/or target tracking is performed on the N^{th} frame of image to obtain at least one N^{th} target area; and then, online training is performed on a training detection unit by using an (N-1)^{th} target area, where the training detection unit stores all target areas that are detected in a first frame of image to an (N-1)^{th} frame of image, so that online parallel processing on a detected target and the training detection unit is implemented, and multiple target samples are obtained according a user requirement; therefore, a target diversification requirement of an intelligent terminal user is satisfied, and further, a relatively accurate target area can be obtained according to a current user requirement.

## Description

This application claims priority to Chinese Patent Application No. 201310241922.7, filed with the Chinese Patent Office on June 17, 2013 and entitled "TARGET DETECTION METHOD AND APPARATUS BASED ON ONLINE TRAINING", which is incorporated herein by reference in its entirety.

### TECHNICAL FIELD

Embodiments of the present invention relate to image processing technologies, and in particular, to a target detection method and apparatus based on online training.

### BACKGROUND

Target detection, that is, target extraction, is an important part of Smart Shoot. By using the target detection, detection and image segmentation may be performed on a target area. After an intelligent terminal detects a target, the intelligent terminal may perform processing, such as automatic focus, automatic exposure, image enhancement, denoising, background blurring, and adjusting a contrast ratio of the target area, on the target, where the intelligent terminal may be a smartphone, a tablet computer, a palmtop computer, or the like.

In the prior art, an offline training method is mainly used for target detection, that is, in an offline state, a target detector, for example, a human face detector is trained before an image is processed, and then during detection, the detector is used to scan a photo pixel by pixel, and it is considered that an area satisfying a requirement is a target area; otherwise, the area is a background.

However, sample values obtained by the offline training are relatively limited; therefore, a relatively accurate target area cannot be obtained according to a current user requirement.

### SUMMARY

Embodiments of the present invention provide a target detection method and apparatus based on online training, so as to obtain a relatively accurate target area according to a current user requirement.

According to a first aspect, an embodiment of the present invention provides a target detection method based on online training, including:
obtaining an N^{th} frame of image, where N is an integer greater than 2;
performing target detection and/or target tracking on the N^{th} frame of image to obtain at least one N^{th} target area, where the N^{th} target area is an area obtained by performing target detection on the N^{th} frame of image; and
performing online training on a training detection unit by using an (N-1)^{th} target area, where the (N-1)^{th} target area is at least one target area obtained by performing target detection on an (N-1)^{th} frame of image, the (N-1)^{th} frame of image is a previous frame of image of the N^{th} frame of image, and the training detection unit stores all target areas that are detected in a first frame of image to the (N-1)^{th} frame of image.

In a first possible implementation manner, the method further includes: performing online training on the training detection unit by using the N^{th} target area, where the N^{th} target area is at least one target area obtained by performing target detection on the N^{th} frame of image.

With reference to the first aspect or the first possible implementation manner of the first aspect, in a second possible implementation manner, after the performing online training on a training detection unit by using the (N-1)^{th} target area, the method further includes:
performing target detection on an obtained (N+1)^{th} frame of image to obtain at least one (N+1)^{th} target area; and
performing online training on the training detection unit by using the N^{th} target area.

With reference to the first aspect to the second possible implementation manner of the first aspect, in a third possible implementation manner, before the obtaining an N^{th} frame of image, the method further includes:
obtaining a second frame of image;
performing target detection on the second frame of image to obtain at least one second target area, where the second target area is an area obtained by performing target detection on the second frame of image; and
performing online training on the training detection unit by using the second target area.

With reference to the first aspect to the third possible implementation manner of the first aspect, in a fourth possible implementation manner, before the obtaining an N^{th} frame of image, the method further includes:
obtaining the first frame of image;
determining at least one target point of the first frame of image;
performing image segmentation on a surrounding area of the target point to obtain a first target area; and
performing online training on the training detection unit by using the first target area.

With reference to the first aspect to the fourth possible implementation manner of the first aspect, in a fifth possible implementation manner, after the performing online training on a training detection unit by using an (N-1)^{th} target area, the method further includes:
performing automatic focus on the target area, performing automatic exposure on the target area, adjusting a contrast ratio of the target area, enhancing the target area, denoising the target area, or blurring an area outside the target area.

According to a second aspect, an embodiment of the present invention provides a target detection apparatus based on online training, including:
an obtaining unit, configured to obtain an N^{th} frame of image, where N is an integer greater than 2;
a target detection unit, configured to perform target detection and/or target tracking on the N^{th} frame of image to obtain at least one N^{th} target area, where the N^{th} target area is an area obtained by performing target detection on the N^{th} frame of image; and
a training detection unit, configured to perform online training by using an (N-1)^{th} target area, where the (N-1)^{th} target area is at least one (N-1)^{th} target area obtained by performing target detection on an (N-1)^{th} frame of image, the (N-1)^{th} frame of image is a previous frame of image of the N^{th} frame of image, and the training detection unit stores all target areas that are detected in a first frame of image to the (N-1)^{th} frame of image.

In a first possible implementation manner, the training detection unit is further configured to perform online training on the training detection unit by using the N^{th} target area, where the N^{th} target area is at least one target area obtained by performing target detection on the N^{th} frame of image.

With reference to the second aspect or the first possible implementation manner of the second aspect, in a second possible implementation manner, the obtaining unit is further configured to perform target detection on an obtained (N+1)^{th} frame of image to obtain at least one (N+ 1)^{th} target area; and
the target detection unit is further configured to perform online training on the training detection unit by using the N^{th} target area.

With reference to the second aspect to the second possible implementation manner of the second aspect, in a third possible implementation manner, the obtaining unit is further configured to obtain a second frame of image;
the target detection unit is further configured to perform target detection on the second frame of image to obtain at least one second target area, where the second target area is an area obtained by performing target detection on the second frame of image; and
the training detection unit is further configured to perform online training by using the second target area.

With reference to the second aspect to the third possible implementation manner of the second aspect, in a fourth possible implementation manner, the apparatus further includes: a determining unit and an image segmentation unit, where
the obtaining unit is further configured to obtain a first frame of image;
the determining unit is configured to determine at least one target point of the first frame of image;
the image segmentation unit is configured to perform image segmentation on a surrounding area of the target point to obtain a first target area; and
the target detection unit is further configured to perform online training by using the first target area.

With reference to the first aspect to the fourth possible implementation manner of the first aspect, in a fifth possible implementation manner, the apparatus further includes: a processing unit, configured to perform automatic focus on the target area, perform automatic exposure on the target area, adjust a contrast ratio of the target area, enhance the target area, denoise the target area, or blur an area outside the target area.

The embodiments of the present invention provide a target detection method and apparatus based on online training. According to the target detection method based on online training in the present invention, an N^{th} frame of image is obtained; target detection and/or target tracking is performed on the N^{th} frame of image to obtain at least one N^{th} target area, where the N^{th} target area is an area obtained by performing target detection on the N^{th} frame of image; and then, online training is performed on a training detection unit by using an (N-1)^{th} target area, where the (N-1)^{th} target area is at least one target area obtained by performing target detection on an (N-1)^{th} frame of image, the (N-1)^{th} frame of image is a previous frame of image of the N^{th} frame of image, and the training detection unit stores all target areas that are detected in a first frame of image to the (N-1)^{th} frame of image, so that online parallel processing on a detected target and the training detection unit is implemented, and multiple target samples can be obtained according a user requirement; therefore, a target diversification requirement of an intelligent terminal user is satisfied, and further, a relatively accurate target area can be obtained according to a current user requirement.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1 is a flowchart of Embodiment 1 of a target detection method based on online training according to the present invention;
FIG. 2 is a flowchart of Embodiment 2 of a target detection method based on online training according to the present invention;
FIG. 3 is a flowchart of Embodiment 3 of a target detection method based on online training according to the present invention;
FIG. 4 is a schematic structural diagram of Embodiment 1 of a target detection apparatus based on online training according to the present invention; and
FIG. 5 is a schematic structural diagram of Embodiment 2 of a target detection apparatus based on online training according to the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

A target detection method based on online training provided in the embodiments of the present invention may be specifically applied to target detection performed by an intelligent terminal. The intelligent terminal may be a smartphone, a tablet computer, or the like. The target detection method based on online training provided in the embodiments is applying an online learning theory to target detection to build a target detection model based on online learning, so as to simulate self learning and updating of a human visual system, so that a difference between a target area and a background is gradually clear through the online learning and an effect of target detection is improved. The target detection method based on online training provided in the embodiments may be performed by using a target detection apparatus based on online training. The target detection apparatus based on online training may be integrated in the intelligent terminal, and the target detection apparatus based on online training may be implemented by using software and/or hardware. The following describes in detail the target detection method and apparatus based on online training provided in the embodiments.

### Embodiment 1

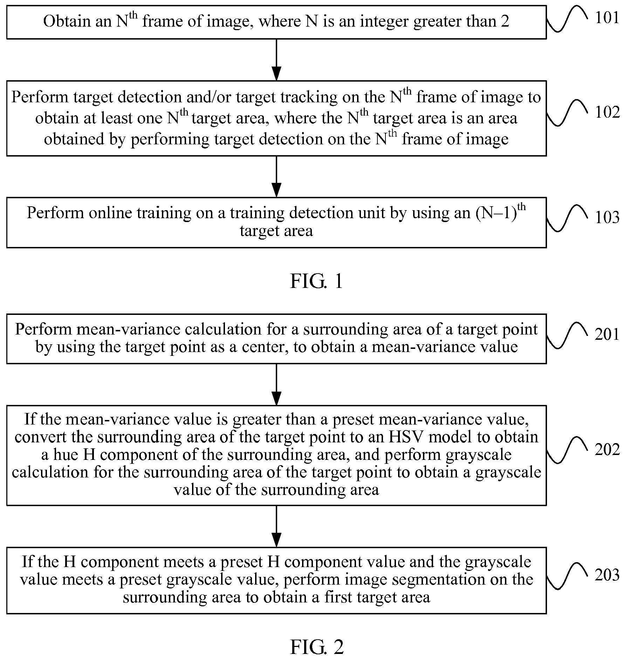

FIG. 1 is a flowchart of Embodiment 1 of a target detection method based on online training according to the present invention. As shown in FIG. 1, the method in this embodiment may include:
Step 101: Obtain an N^{th} frame of image, where N is an integer greater than 2.

In this embodiment, an intelligent terminal may obtain the N^{th} frame of image by taking a photo, taking a video, previewing a photo, or previewing a video.

Step 102: Perform target detection and/or target tracking on the N^{th} frame of image to obtain at least one N^{th} target area, where the N^{th} target area is an area obtained by performing target detection on the N^{th} frame of image.

In this embodiment, the intelligent terminal may perform target detection on the N^{th} frame of image in at least two implementation manners:
The first implementation manner: an image obtained by the intelligent terminal before the N^{th} frame of image is obtained and the currently obtained N^{th} frame of image are unrelated and discontinuous images, so that the intelligent terminal may perform target detection on the N^{th} frame of image to obtain the at least one N^{th} target area.
The second implementation manner: an image obtained by the intelligent terminal before the N^{th} frame of image is obtained and the currently obtained N^{th} frame of image are related and continuous images, so that the intelligent terminal may predict a target area in the currently obtained N^{th} frame of image according to a moving track of a target area, that is, target tracking, to obtain a predicted target area, and perform target detection in the predicted target area, so as to obtain the at least one N^{th} target area.

In this embodiment, a manner of predicting the target area in the currently obtained N^{th} frame of image by using the moving track may be implemented by using a target tracking method.

For example, for a target area in a relatively small moving range, an optical flow algorithm may be used to perform target tracking, that is, a moving track of the target area is determined according to movements of the target area in a few previous frames, and a feature point of a coordinate of the target area of an (N-1)^{th} frame is obtained according to the coordinate, and then, a coordinate of the target area in the current N^{th} frame of image is calculated according to a gradient difference and a grayscale difference between the (N-1)^{th} frame and the N^{th} frame by using a calculation formula of the optical flow algorithm, so that the detection range can be narrowed down and a result of the target detection may be further verified. It should be noted that any target tracking method is applicable to this embodiment and is not limited thereto.

In this embodiment, a specific implementation manner of target detection may be a booting algorithm, a random forests algorithm, or a similarity matching algorithm, and a specific method for implementing target detection is not limited herein.

For example, in this embodiment, the random forests algorithm is used as an example for performing target detection on the N^{th} frame of image, which is specifically:
first, collecting at least M feature points in any area of the N^{th} frame of image; then, grouping the at least M feature points into K groups and forming a tree by using feature points in each group, where each leaf node of the tree stores a coordinate of the feature point, K is greater than 1, and M is greater than or equal to K; then, comparing grayscale values that correspond to coordinates of feature points stored in adjacent leaf nodes in the tree, if a grayscale value that corresponds to a first leaf node is greater than a grayscale value that corresponds to a second leaf node, recording 1 in a parent node of the first leaf node and the second leaf node, if the grayscale value that corresponds to the first leaf node is less than the grayscale value that corresponds to the second leaf node, recording 0 in the parent node of the first leaf node and the second leaf node; and gathering 1s or 0s recorded in the parent nodes to a root node to obtain a binary number string at the root node of the tree; and then, comparing the binary number string with a binary number string stored in the training detection unit, where the training detection unit stores all the target areas in a form of a binary number string, and binary number strings stored in the training detection unit include a positive sample binary number string and a negative sample binary number string;
if the positive sample binary number string stored in the training detection unit is the same as the binary number string of the N^{th} frame of image, determining that the binary number string is a positive sample; and if the negative sample binary number string stored in the training detection unit is the same as the binary number string of the N^{th} frame of image, determining that the binary number string is a negative sample, where the negative sample is a sample close to the positive sample; and finally, determining that the positive sample is the N^{th} target area.

Step 103: Perform online training on a training detection unit by using an (N-1)^{th} target area.

Specifically, the (N-1)^{th} target area is at least one target area obtained by performing target detection on an (N-1)^{th} frame of image, the (N-1)^{th} frame of image is a previous frame of image of the N^{th} frame of image, and the training detection unit stores all target areas that are detected in a first frame of image to the (N-1)^{th} frame of image.

In this embodiment, after the foregoing random forests algorithm is used as an example for performing target detection on the N^{th} frame of image, an implementation manner of performing online training on a training detection unit by using an (N-1)^{th} target area is specifically:
performing online training on the training detection unit by using the (N-1)^{th} target area, that is, when the at least one N^{th} target area of the N^{th} frame of image is obtained, performing training on the (N-1^{th} target area obtained from the (N-1)^{th} frame of image, that is, updating a binary number corresponding to a positive sample and a quantity of digits of the binary number, and a binary number corresponding to a negative sample and a quantity of digits of the binary number in the training detection unit, so that online parallel processing on a detected target and the training detection unit is implemented, a target diversification requirement of an intelligent terminal user is satisfied, and further a calculation time is reduced.

In this embodiment, an N^{th} frame of image is obtained; target detection and/or target tracking is performed on the N^{th} frame of image to obtain at least one N^{th} target area, where the N^{th} target area is an area obtained by performing target detection on the N^{th} frame of image; and then, online training is performed on a training detection unit by using an (N-1)^{th} target area, where the (N-1)^{th} target area is at least one target area obtained by performing target detection on an (N-1)^{th} frame of image, the (N-1)^{th} frame of image is a previous frame of image of the N^{th} frame of image, and the training detection unit stores all target areas that are detected in a first frame of image to the (N-1)^{th} frame of image, so that online parallel processing on a detected target and the training detection unit is implemented, and multiple target samples can be obtained according a user requirement; therefore, a target diversification requirement of an intelligent terminal user is satisfied, and further, a relatively accurate target area can be obtained according to a current user requirement.

Further, based on the foregoing embodiment, the method may further include:
performing online training on the training detection unit by using the N^{th} target area, where the N^{th} target area is at least one target area obtained by performing target detection on the N^{th} frame of image.

Specifically, online training is performed on the training detection unit by using the N^{th} target area, that is, after the at least one N^{th} target area of the N^{th} frame of image is obtained, the N^{th} target area, and a binary model built based on a first frame of image to the (N-1)^{th} frame of image are used to train the training detection unit, that is, a binary number that corresponds to a positive sample and a quantity of digits of the binary number, and a binary number that corresponds to a negative sample and a quantity of digits of the binary number in the training detection unit are updated, so that online serial processing on a detected target and the training detection unit is implemented, a target diversification requirement of an intelligent terminal user is satisfied, and further, a training effect is improved.

Further, after the performing online training on a training detection unit by using an N^{th} target area or an (N-1)^{th} target area in step 102, the method may further include:
performing target detection on an obtained (N+1)^{th} frame of image to obtain at least one (N+1)^{th} target area; and
performing online training on the training detection unit by using the (N+1)^{th} target area.

Specific implementation manners and effects are similar to step 101 and step 102, which are not described in detail herein again.

On a basis of the foregoing embodiment, before the obtaining an N^{th} frame of image in step 101, the method may further include:
obtaining the first frame of image;
determining at least one target point of the first frame of image;
performing image segmentation on a surrounding area of the target point to obtain a first target area; and
performing online training on the training detection unit by using the first target area.

### Embodiment 2

FIG. 2 is a flowchart of Embodiment 2 of a target detection method based on online training according to the present invention. As shown in FIG. 2, based on the foregoing embodiment, the performing image segmentation on a surrounding area of the target point to obtain a first target area may include:
Step 201: Perform mean-variance calculation for the surrounding area of the target point by using the target point as a center, to obtain a mean-variance value.
Step 202: If the mean-variance value is greater than a preset mean-variance value, convert the surrounding area of the target point to an HSV model to obtain a hue H component of the surrounding area, and perform grayscale calculation for the surrounding area of the target point to obtain a grayscale value of the surrounding area.
Step 203: If the H component meets a preset H component value and the grayscale value meets a preset grayscale value, perform image segmentation on the surrounding area to obtain the first target area.

Specifically, the intelligent terminal may obtain the first frame of image by taking a photo or taking a video. Then, the at least one target point may be obtained by touching or selecting the first frame of image by a user. For example, for an intelligent terminal with a touchscreen function, the user may select the target point by means of point selection or box selection.

In this embodiment, the surrounding area of the target point is determined according to the target point selected by the user, so as to obtain a target area of an appropriate size, and the first target area is obtained according to the image segmentation.

For example, mean-variance calculation may be performed in an 80 × 80 area surrounding the target point selected by the user, for example, the 80 × 80 area may be down-sampled to 40x40 for performing mean-variance calculation. If a result of the mean-variance calculation meets a preset value, it may be determined that there are relatively more feature points in the target area, which is suitable for performing operations of target tracking and target detection, and if the result of the mean-variance calculation does not meet the preset value, it may be determined that there are relatively fewer feature points in the target area, which is not suitable for performing the operations of target tracking and target detection. Therefore, no subsequent operation is performed and it should be noted that the preset value may be set by persons skilled in the art according to an actual situation.

Further, after the result of the mean-variance calculation meets the preset value, a YUV format of an image is converted to an HSV format to obtain a color H component of the image, where, according to a principle of color enhancement, the color component may be classified to a color such as red, skin color, yellow, green, dark blue, blue, purple, or purplish red. Then, the surrounding area of the target point determined by the user is divided according to a size of 7x7, and mean value calculation is performed on grayscale values of pixels in the 7x7 area, and results of the mean value calculation are marked corresponding to three ranges of grayscale values, where the three ranges of grayscale values are 1 to 100, 100 to 150, and 150 to 255 respectively, and then binary segmentation is performed on the image according to a grayscale value threshold and an H component threshold, that is, pixels meeting the grayscale value threshold and the H component threshold are used as an initially determined target area.

Further, eight-neighborhood marking and optimization processing may be performed on an isolated target area and a projected target area according to the initially determined target area, so as to obtain the first target area.

Based on the foregoing embodiment, feature point collection is performed in the first target area, and an implementation manner thereof is the same as that in the foregoing embodiment and is not described in detail herein again; in addition, a target detection apparatus based on online training stores a binary number in the obtained first target area as a positive sample binary number, and stores a binary number in initially determined target area that is optimized as a negative sample binary number.

Based on the foregoing embodiment, after the performing online training on the training detection unit by using the first target area and before the obtaining an N^{th} frame of image, the method may further include:
obtaining a second frame of image; and
performing target detection on the second frame of image to obtain at least one second target area.

This embodiment is applicable to a scenario in which online parallel processing is performed on the detected target and the training detection unit, that is, after the intelligent terminal obtains the first frame of image and obtains the at least one first target area by using the image segmentation, the intelligent terminal may use the first target area to perform online training on the training detection unit, and then the intelligent terminal may further obtain the second frame of image, and perform target detection on the second frame of image to obtain the at least one second target area. However, online training is performed on the training detection unit by using the first target area obtained by using the first frame of image before the second frame of image is obtained. Therefore, in a process of obtaining the at least one second target area, no target area is used to perform online training on the training detection unit.

In another implementation manner, based on the foregoing embodiment, after the performing online training on the training detection unit by using the first target area and before the obtaining an N^{th} frame of image, the method may further include:
obtaining a second frame of image;
performing target detection on the second frame of image to obtain at least one second target area; and
performing online training on the training detection unit by using the second target area.

This embodiment is applicable to a scenario in which online serial processing is performed on the detected target and the training detection unit, that is, after the intelligent terminal obtains the first frame of image and obtains the at least first target area by using the image segmentation, the intelligent terminal may use the first target area to perform online training on the training detection unit; then, the intelligent terminal may further obtain the second frame of image, and perform target detection on the second frame of image to obtain the at least one second target area; and then, the intelligent terminal performs online training on the training detection unit by using the at least one second target area, so that a training effect is improved.

### Embodiment 3

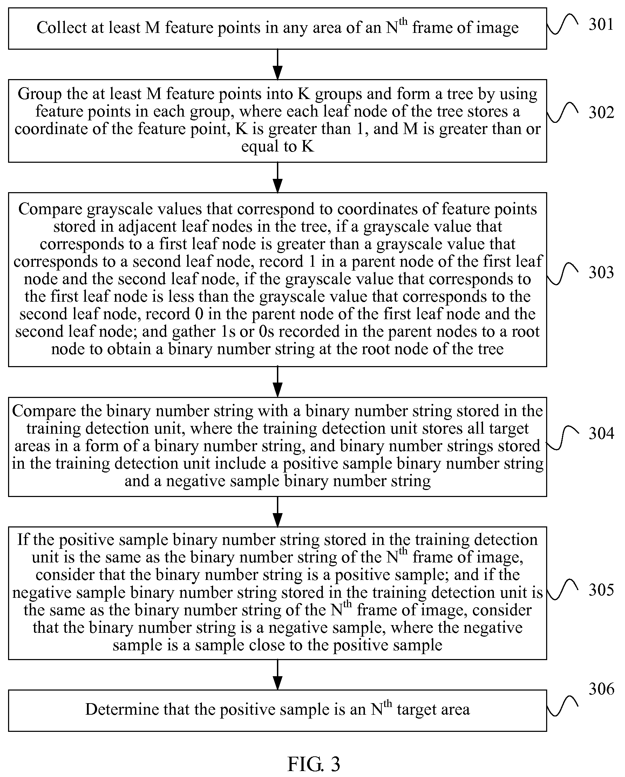

FIG. 3 is a flowchart of Embodiment 3 of a target detection method based on online training according to the present invention. As shown in FIG. 3, based on the foregoing embodiment, the performing target detection on the N^{th} frame of image may include:
Step 301: Collect at least M feature points in any area of the N^{th} frame of image.

Specifically, several feature points are collected in any area in the N^{th} frame of image, and coordinates of these feature points are preset before the feature points are collected, for example, a preset size of a feature point collection area is 8 x8, and two feature points in the area are collected, and preset coordinates of the feature points are (1, 4) and (5, 6) respectively. It should be noted that the preset coordinate of the feature point is specific to a coordinate in the feature point collection area rather than a coordinate of the frame of image; however, if a size of a target area obtained in the first frame is 16 × 16, an area in which actual collection is performed in the N^{th} frame of image may be set to 16 × 16, but is not limited thereto, and may be re-divided according to accuracy of the obtained target area. In this embodiment, an example in which the area in which actual collection is performed is set to 16 × 16 is used, correspondingly, the size of the collection area is enlarged to 16 × 16, and correspondingly, coordinates of the feature points are (2, 8) and (10, 12), so that several feature points in the area are obtained.

Step 302: Group the at least M feature points into K groups and form a tree by using feature points in each group, where each leaf node of the tree stores a coordinate of the feature point, K is greater than 1, and M is greater than or equal to K.

Specifically, the several feature points may be grouped into K groups, and then the feature points in each group form a tree, and each leaf node of the tree stores a coordinate of the feature point in the N^{th} frame of image.

Step 303: Compare grayscale values that correspond to coordinates of feature points stored in adjacent leaf nodes in the tree, if a grayscale value that corresponds to a first leaf node is greater than a grayscale value that corresponds to a second leaf node, record 1 in a parent node of the first leaf node and the second leaf node, if the grayscale value that corresponds to the first leaf node is less than the grayscale value that corresponds to the second leaf node, record 0 in the parent node of the first leaf node and the second leaf node; and gather 1s or 0s recorded in the parent nodes to a root node to obtain a binary number string at the root node of the tree.

The grayscale values that correspond to the coordinates of the feature points stored in the adjacent leaf nodes in the tree, if the grayscale value that corresponds to the first leaf node is greater than the grayscale value that corresponds to the second leaf node, 1 is recorded in the parent node of the first leaf node and the second leaf node, and if the grayscale value that corresponds to the first leaf node is less than the grayscale value that corresponds to the second leaf node, 0 is recorded in the parent node of the first leaf node and the second leaf node, so as to gather 1s or 0s in the parent nodes to the root node to obtain the binary number string at the root node of the tree. It should be noted that K binary number strings may be obtained according to the foregoing K groups of feature points.

Step 304: Compare the binary number string with a binary number string stored in the training detection unit, where the training detection unit stores all the target areas in a form of a binary number string, and binary number strings stored in the training detection unit include a positive sample binary number string and a negative sample binary number string.

Step 305: If the positive sample binary number string stored in the training detection unit is the same as the binary number string of the N^{th} frame of image, determine that the binary number string is a positive sample; and if the negative sample binary number string stored in the training detection unit is the same as the binary number string of the N^{th} frame of image, determine that the binary number string is a negative sample, where the negative sample is a sample close to the positive sample.

In this embodiment, each binary number string in the N^{th} frame of image and a binary number of a binary model stored in the target detection apparatus based on online training are compared, where the target detection apparatus based on online training stores a positive sample binary number of the target area and a negative sample binary number of a background area. Therefore, if a binary number string of the N^{th} frame of image is the same as a binary number obtained in the corresponding target area, it is determined that the binary number string is a positive sample, and if the binary number string is the same as a binary number obtained in the corresponding background area, it is determined that the binary number string is a negative sample.

Step 306: Determine that the positive sample is the N^{th} target area.

Based on the foregoing embodiment, after the target detection is performed, a detector may be trained, which is specifically:
searching for a weight that corresponds to a binary number, in the target detection apparatus, the same as each positive sample binary number, and adding together weights of all the positive sample binary numbers, to obtain an accumulated weight of the N^{th} frame of image, then, comparing the accumulated weight with K/2, if the accumulated weight is greater than K/2, determining that a sampling area corresponding to the binary number is a target area, and if the accumulated weight is less than K/2, determining that the sampling area corresponding to the binary number is a background area, where, it should be noted that a weight of a positive sample binary number is a ratio obtained by dividing a quantity of digits, of the binary number, obtained from the first frame to the (N-1)^{th} frame by a sum of a quantity of digits of all binary numbers.

### Embodiment 4

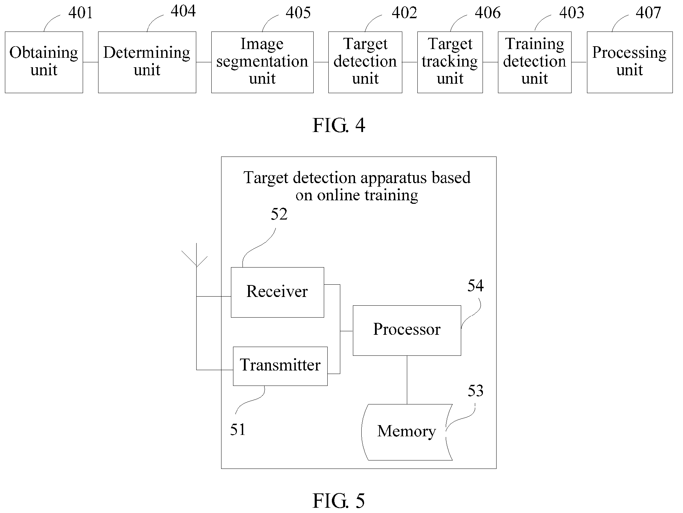

FIG. 4 is a schematic structural diagram of Embodiment 1 of a target detection apparatus based on online training according to the present invention. As shown in FIG. 4, the target detection apparatus based on online training includes an obtaining unit 401, a target detection unit 402, and a training detection unit 403.

The obtaining unit 401 is configured to obtain an N^{th} frame of image, where N is an integer greater than 2.

The target detection unit 402 is configured to perform target detection and/or target tracking on the N^{th} frame of image to obtain at least one N^{th} target area, where the N^{th} target area is an area obtained by performing target detection on the N^{th} frame of image.

The training detection unit 403 is configured to perform online training by using an (N-1)^{th} target area, where the (N-1)^{th} target area is at least one (N-1)^{th} target area obtained by performing target detection on an (N-1)^{th} frame of image, the (N-1)^{th} frame of image is a previous frame of image of the N^{th} frame of image, and the training detection unit stores all target areas that are detected in a first frame of image to the (N-1)^{th} frame of image.

The apparatus in this embodiment may be configured to perform the technical solution of the method embodiment shown in FIG. 1, and implementation principles and technical effects thereof are similar, which are not described in detail herein again.

Based on the foregoing embodiment, the training detection unit 403 is further configured to perform online training on the training detection unit by using the N^{th} target area, where the N^{th} target area is at least one target area obtained by performing target detection on the N^{th} frame of image.

Based on the foregoing embodiment, the obtaining unit 401 is further configured to perform target detection on an obtained (N+1)^{th} frame of image to obtain at least one (N+1)^{th} target area; and
the target detection unit 402 is further configured to perform online training on the training detection unit by using the N^{th} target area.

Further, the obtaining unit 401 is further configured to obtain a second frame of image;
the target detection unit 402 is further configured to perform target detection on the second frame of image to obtain at least one second target area, where the second target area is an area obtained by performing target detection on the second frame of image; and
the training detection unit is further configured to perform online training by using the second target area.

Further, the apparatus may further include a determining unit 404 and an image segmentation unit 405, where
the obtaining unit 401 is further configured to obtain a first frame of image; the determining unit 404 is configured to determine at least one target point of the first frame of image;

the image segmentation unit 405 is configured to perform image segmentation on a surrounding area of the target point to obtain a first target area; and. the target detection unit 402 is further configured to perform online training by using the first target area.

Further, the apparatus may further include:
the image segmentation unit 405, configured to perform mean-variance calculation for the surrounding area of the target point by using the target point as a center, to obtain the mean-variance value; if the mean-variance value is greater than a preset mean-variance value, convert the surrounding area of the target point to an HSV model to obtain a hue H component of the surrounding area, and perform grayscale calculation for the surrounding area of the target point to obtain a grayscale value of the surrounding area; and if the H component meets a preset H component value and the grayscale value meets a preset grayscale value, perform image segmentation on the surrounding area to obtain the first target area.

The image segmentation unit 405 is specifically configured to obtain the at least one target point by touching or selecting the first frame of image by a user.

The target detection unit 402 is specifically configured to collect at least M feature points in any area of the N^{th} frame of image; group the at least M feature points into K groups and form a tree by using feature points in each group, where each leaf node of the tree stores a coordinate of the feature point, K is greater than 1, and M is greater than or equal to K; compare grayscale values that correspond to coordinates of feature points stored in adjacent leaf nodes in the tree, if a grayscale value that corresponds to a first leaf node is greater than a grayscale value that corresponds to a second leaf node, record 1 in a parent node of the first leaf node and the second leaf node, if the grayscale value that corresponds to the first leaf node is less than the grayscale value that corresponds to the second leaf node, record 0 in the parent node of the first leaf node and the second leaf node; and gather 1s or 0s recorded in the parent nodes to a root node to obtain a binary number string at the root node of the tree; and compare the binary number string with a binary number string stored in the training detection unit, where the training detection unit stores all the target areas in a form of a binary number string, and binary number strings stored in the training detection unit include a positive sample binary number string and a negative sample binary number string; if the positive sample binary number string stored in the training detection unit is the same as the binary number string of the N^{th} frame of image, determine that the binary number string is a positive sample; and if the negative sample binary number string stored in the training detection unit is the same as the binary number string of the N^{th} frame of image, determine that the binary number string is a negative sample, where the negative sample is a sample close to the positive sample; and determine that the positive sample is the N^{th} target area.

Further, the apparatus further includes: a target tracking unit 406, configured to perform target tracking on the N^{th} frame of image by using an optical flow algorithm.

Based on the foregoing embodiment, the apparatus may further include: a processing unit 407, configured to perform automatic focus on the target area, perform automatic exposure on the target area, adjust a contrast ratio of the target area, enhance the target area, denoise the target area, or blur an area outside the target area.

### Embodiment 5

FIG. 5 is a schematic structural diagram of Embodiment 2 of a target detection apparatus based on online training according to the present invention. As shown in FIG. 5, the apparatus in this embodiment may include: a transmitter 51, a receiver 52, a memory 53, and a processor 54 connected to the transmitter 51, the receiver 52, and the memory 53 separately. Certainly, the target detection apparatus based on online training may further include common components such as an antenna, a baseband processing component, an intermediate radio frequency processing component, and an input/output apparatus, which is not limited in this embodiment of the present invention.

The memory 53 stores a set of program code, and the processor 54 is configured to invoke the program code stored in the memory 53 and execute the following operations:
obtaining an N^{th} frame of image, where N is an integer greater than 2;
performing target detection and/or target tracking on the N^{th} frame of image to obtain at least one N^{th} target area, where the N^{th} target area is an area obtained by performing target detection on the N^{th} frame of image; and
performing online training on a training detection unit by using an (N-1)^{th} target area, where the (N-1)^{th} target area is at least one target area obtained by performing target detection on an (N-1)^{th} frame of image, the (N-1)^{th} frame of image is a previous frame of image of the N^{th} frame of image, and the training detection unit stores all target areas that are detected in a first frame of image to the (N-1)^{th} frame of image.

In this embodiment, online serial or parallel processing on a detected target and a training detection unit is implemented; therefore, a target diversification requirement of an intelligent terminal user is satisfied.

Persons of ordinary skill in the art may understand that all or some of the steps of the method embodiments may be implemented by a program instructing relevant hardware. The program may be stored in a computer-readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention rather than limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, as long as such modifications or replacements do not cause the essence of corresponding technical solutions to depart from the scope of the technical solutions of the embodiments of the present invention.

## Claims

1. A target detection method based on online training, comprising:
obtaining an N^{th} frame of image, wherein N is an integer greater than 2;
performing target detection and/or target tracking on the N^{th} frame of image to obtain at least one N^{th} target area, wherein the N^{th} target area is an area obtained by performing target detection on the N^{th} frame of image; and
performing online training on a training detection unit by using an (N-1)^{th} target area, wherein the (N-1)^{th} target area is at least one target area obtained by performing target detection on an (N-1)^{th} frame of image, the (N-1)^{th} frame of image is a previous frame of image of the N^{th} frame of image, and the training detection unit stores all target areas that are detected in a first frame of image to the (N-1)^{th} frame of image.

2. The method according to claim 1, further comprising:
performing online training on the training detection unit by using the N^{th} target area, wherein the N^{th} target area is at least one target area obtained by performing target detection on the N^{th} frame of image.

3. The method according to claim 1 or 2, after the performing online training on a training detection unit by using the (N-1)^{th} target area, further comprising:
performing target detection on an obtained (N+1)^{th} frame of image to obtain at least one (N+1)^{th} target area; and
performing online training on the training detection unit by using the N^{th} target area.

4. The method according to any one of claims 1 to 3, before the obtaining an N^{th} frame of image, further comprising:
obtaining a second frame of image;
performing target detection on the second frame of image to obtain at least one second target area, wherein the second target area is an area obtained by performing target detection on the second frame of image; and
performing online training on the training detection unit by using the second target area.

5. The method according to any one of claims 1 to 4, before the obtaining an N^{th} frame of image, further comprising:
obtaining the first frame of image;
determining at least one target point of the first frame of image;
performing image segmentation on a surrounding area of the target point to obtain a first target area; and
performing online training on the training detection unit by using the first target area.

6. The method according to claim 5, wherein the performing image segmentation on a surrounding area of the target point to obtain a first target area comprises:
performing mean-variance calculation for the surrounding area of the target point by using the target point as a center, to obtain the mean-variance value;
if the mean-variance value is greater than a preset mean-variance value, converting the surrounding area of the target point to an HSV model to obtain a hue H component of the surrounding area, and performing grayscale calculation for the surrounding area of the target point to obtain a grayscale value of the surrounding area; and
if the H component meets a preset H component value and the grayscale value meets a preset grayscale value, performing image segmentation on the surrounding area to obtain the first target area.

7. The method according to claim 6, wherein the determining at least one target point of the first frame of image comprises:
obtaining the at least one target point by touching or selecting the first frame of image by a user.

8. The method according to any one of claims 1 to 7, wherein the performing target detection on the N^{th} frame of image comprises:
collecting at least M feature points in any area of the N^{th} frame of image;
grouping the at least M feature points into K groups and forming a tree by using feature points in each group, wherein each leaf node of the tree stores a coordinate of the feature point, K is greater than 1, and M is greater than or equal to K;
comparing grayscale values that correspond to coordinates of feature points stored in adjacent leaf nodes in the tree, if a grayscale value that corresponds to a first leaf node is greater than a grayscale value that corresponds to a second leaf node, recording 1 in a parent node of the first leaf node and the second leaf node, if the grayscale value that corresponds to the first leaf node is less than the grayscale value that corresponds to the second leaf node, recording 0 in the parent node of the first leaf node and the second leaf node; and gathering 1s or 0s recorded in the parent nodes to a root node to obtain a binary number string at the root node of the tree;
comparing the binary number string with a binary number string stored in the training detection unit, wherein the training detection unit stores all the target areas in a form of a binary number string, and binary number strings stored in the training detection unit comprise a positive sample binary number string and a negative sample binary number string;
if the positive sample binary number string stored in the training detection unit is the same as the binary number string of the N^{th} frame of image, determining that the binary number string is a positive sample; and if the negative sample binary number string stored in the training detection unit is the same as the binary number string of the N^{th} frame of image, determining that the binary number string is a negative sample, wherein the negative sample is a sample close to the positive sample; and
determining that the positive sample is the N^{th} target area.

9. The method according to any one of claims 1 to 8, wherein the performing a tracking algorithm on the N^{th} frame of image comprises:
performing target tracking on the N^{th} frame of image by using an optical flow algorithm.

10. The method according to claims 1 to 9, after the performing online training on a training detection unit by using an (N-1)^{th} target area, further comprising:
performing automatic focus on the target area, performing automatic exposure on the target area, adjusting a contrast ratio of the target area, enhancing the target area, denoising the target area, or blurring an area outside the target area.

11. A target detection apparatus based on online training, comprising:
an obtaining unit, configured to obtain an N^{th} frame of image, wherein N is an integer greater than 2;
a target detection unit, configured to perform target detection and/or target tracking on the N^{th} frame of image to obtain at least one N^{th} target area, wherein the N^{th} target area is an area obtained by performing target detection on the N^{th} frame of image; and
a training detection unit, configured to perform online training by using an (N-1)^{th} target area, wherein the (N-1)^{th} target area is at least one (N-1)^{th} target area obtained by performing target 1 detection on an (N-1)^{th} frame of image, the (N-1)^{th} frame of image is a previous frame of image of the N^{th} frame of image, and the training detection unit stores all target areas that are detected in a first frame of image to the (N-1)^{th} frame of image.

12. The apparatus according to claim 11, wherein
the training detection unit is further configured to perform online training on the training detection unit by using the N^{th} target area, wherein the N^{th} target area is at least one target area obtained by performing target detection on the N^{th} frame of image.

13. The apparatus according to claim 11 or 12, wherein
the obtaining unit is further configured to perform target detection on an obtained (N+1)^{th} frame of image to obtain at least one (N+1)^{th} target area; and
the target detection unit is further configured to perform online training on the training detection unit by using the N^{th} target area.

14. The apparatus according to any one of claims 11 to 13, comprising:
the obtaining unit, further configured to obtain a second frame of image;
the target detection unit, further configured to perform target detection on the second frame of image to obtain at least one second target area, wherein the second target area is an area obtained by performing target detection on the second frame of image; and
the training detection unit, further configured to perform online training by using the second target area.

15. The apparatus according to any one of claims 11 to 14, further comprising: a determining unit and an image segmentation unit, wherein
the obtaining unit is further configured to obtain a first frame of image;
the determining unit is configured to determine at least one target point of the first frame of image;
the image segmentation unit is configured to perform image segmentation on a surrounding area of the target point to obtain a first target area; and
the target detection unit is further configured to perform online training by using the first target area.

16. The apparatus according to claim 15, further comprising:
the image segmentation unit, configured to perform mean-variance calculation for the surrounding area of the target point by using the target point as a center, to obtain the mean-variance value; if the mean-variance value is greater than a preset mean-variance value, convert the surrounding area of the target point to an HSV model to obtain a hue H component of the surrounding area, and perform grayscale calculation for the surrounding area of the target point to obtain a grayscale value of the surrounding area; and if the H component meets a preset H component value and the grayscale value meets a preset grayscale value, perform image segmentation on the surrounding area to obtain the first target area.

17. The apparatus according to claim 16, wherein the image segmentation unit is specifically configured to obtain the at least one target point by touching or selecting the first frame of image by a user.

18. The apparatus according to any one of claims 11 to 17, wherein the target detection unit is specifically configured to collect at least M feature points in any area of the N^{th} frame of image; group the at least M feature points into K groups and form a tree by using feature points in each group, wherein each leaf node of the tree stores a coordinate of the feature point, K is greater than 1, and M is greater than or equal to K; compare grayscale values that correspond to coordinates of feature points stored in adjacent leaf nodes in the tree, if a grayscale value that corresponds to a first leaf node is greater than a grayscale value that corresponds to a second leaf node, record 1 in a parent node of the first leaf node and the second leaf node, if the grayscale value that corresponds to the first leaf node is less than the grayscale value that corresponds to the second leaf node, record 0 in the parent node of the first leaf node and the second leaf node; and gather 1s or 0s recorded in the parent nodes to a root node to obtain a binary number string at the root node of the tree; and compare the binary number string with a binary number string stored in the training detection unit, wherein the training detection unit stores all the target areas in a form of a binary number string, and binary number strings stored in the training detection unit comprise a positive sample binary number string and a negative sample binary number string; if the positive sample binary number string stored in the training detection unit is the same as the binary number string of the N^{th} frame of image, determine that the binary number string is a positive sample; and if the negative sample binary number string stored in the training detection unit is the same as the binary number string of the N^{th} frame of image, determine that the binary number string is a negative sample, wherein the negative sample is a sample close to the positive sample; and determine that the positive sample is the N^{th} target area.

19. The apparatus according to any one of claims 11 to 18, further comprising: a target tracking unit, configured to perform target tracking on the N^{th} frame of image by using an optical flow algorithm.

20. The apparatus according to any one of claims 11 to 16, wherein the apparatus further comprises: a processing unit, configured to perform automatic focus on the target area, perform automatic exposure on the target area, adjust a contrast ratio of the target area, enhance the target area, denoise the target area, or blur an area outside the target area.
